# EUROPÄISCHE PATENTANMELDUNG

(11) **EP 4 311 420 A1**
(43) Veröffentlichungstag der Anmeldung: **31.01.2024**
(21) Anmeldenummer: 23186354.9
(22) Anmeldetag: 19.07.2023
(51) Int. Cl.: A01D 34/74

(54) **HÖHENVERSTELLBARES MÄHGERÄT UND RASENMÄHROBOTER**

(30) Priorität: 22.07.2022 CN 202221898079 U
(71) Anmelder: Shanghai Xiaojia Data Technology Co., Ltd, Shanghai 201306 (CN)
(72) Erfinder: HAO, Doudou, Shanghai (CN)
(74) Vertreter: Moser Götze & Partner Patentanwälte mbB

(57) **Zusammenfassung**

Die Anmeldung offenbart ein höhenverstellbares Mähgerät und einen Rasenmähroboter, wobei das höhenverstellbare Mähgerät eine Basis, einen an der Basis installierten Mäh- und Hebemechanismus und einen Steuermechanismus zum Steuern des Betriebs des Mäh- und Hebemechanismus umfasst, um eine Steuerung der Schnitthöhe des Mähgeräts zu erreichen; wobei der Mähroboter einen Roboterkörper und ein höhenverstellbares Mähgerät zum Mähen der zu mähenden Flächen während der Bewegung des Roboterkörpers umfasst.

## Beschreibung

### TECHNISCHE BEREICHE

Die Anmeldung bezieht sich auf das Gebiet der Rasenmäher, insbesondere auf ein höhenverstellbares Mähgerät und einen Rasenmähroboter.

### TECHNOLOGIE IM HINTERGRUND

Rasenmäher spielen eine wichtige Rolle für den Umweltschutz und die Begrünung von Städten.

Aufgrund des Einflusses des Klimas, des Bodens und anderer Faktoren ist auch das Wachstum des Grases unterschiedlich, und es gibt unterschiedliche Anforderungen an das Mähen. Mähgeräte nach dem Stand der Technik verfügen in der Regel über einen Mechanismus zur Einstellung der Mähhöhe, um sich an unterschiedliches Gras oder unterschiedliche Mählösungen anzupassen, aber der Höhenverstellmechanismus bei vorhandenen Mähern ist in der Regel in mehreren verschiedenen Positionen eingestellt und der Bediener wechselt dann manuell die Gänge zum Einstellen der Höhe.

Darüber hinaus ist die Hebevorrichtung des Höhenverstellmechanismus der vorhandenen Mähgeräte nicht vollständig wasserdicht, und die Grasschnitte bleiben nach dem Schneiden an der Hebevorrichtung hängen, sodass der Bediener es manuell reinigen muss, was den Betrieb des Geräts beeinträchtigt und sehr unbequem ist.

Daher ist es für Fachleute von großem Interesse, wie die technischen Mängel des Standes der Technik verbessert werden können.

### INHALT DER ANMELDUNG

Der Zweck der Anmeldung besteht darin, ein höhenverstellbares Mähgerät bzw. einen Rasenmähroboter bereitzustellen, der die Mähhöhe des Mähgeräts automatisch an die Bedürfnisse des Benutzers anpassen kann, um die oben genannten technischen Probleme zu lösen.

Um den oben genannten Zweck zu erreichen, stellt die Anmeldung auf der einen Seite ein höhenverstellbares Mähgerät zur Verfügung, die Folgendes umfasst, nämlich:

eine Basis und einen an der Basis installierten Mäh- und Hebemechanismus;

den Mähmechanismus, der aus einem Motor zum Mähen und einem Messer besteht;

einen Mähen-Motor zum Antrieb des Messers;

den Hebemechanismus, der einen Hebemotor und eine Hebevorrichtung umfasst;

eine mit dem Mähen-Motor verbundene Hebevorrichtung, wobei sich der Hebemotor durch den Antrieb der Hebevorrichtung auf und ab bewegt, um das Messer anzuheben;

einen Steuermechanismus mit einem Bewegungsmodul und einem Steuermodul;

das Bewegungsmodul, das in der Hebevorrichtung installiert ist, um die Bewegung des Messers auf eine Rundreise innerhalb seines Bewegungsbereichs zu begrenzen;

das Steuermodul zur Steuerung des Betriebs des Mähen- und Hebemotors.

In einigen Fällen umfasst die Hebevorrichtung eine Hebebasis, eine Führungsstruktur und eine Struktur der Leitschraube;

Die Führungsstruktur ist an der Basis installiert;

Die Struktur der Leitschraube ist an der Führungsstruktur befestigt;

Die Hebebasis ist verschiebbar an der Schraubenstruktur installiert;

Der Mähen-Motor ist an der Hebebasis installiert.

Die Hebebasis bewegt sich in Bezug auf die Struktur der Leitschraube unter der Führung der Führungsstruktur auf und ab, um den Mähen-Motor und das Messer anzuheben.

In einigen Fällen umfasst die Struktur der Leitschraube eine Leitschraube und eine Leitmutter;

Die Leitschraube ist in der Führungsstruktur installiert;

Der Hebemotor treibt die Leitschraube an, damit sie sich in Bezug auf die Führungsstruktur dreht;

Die Leitmutter ist an der Leitschraube befestigt und bewegt sich entlang der Leitschraube auf und ab, wenn sich die Leitschraube dreht;

Die Hebebasis ist an der Leitmutter befestigt.

In einigen Fällen umfasst die Führungsstruktur die Führungsschienen und einen auf dieser Schiene installierten Schieber;

Die Anzahl der Führungsschienen ist zwei, die sich auf jeder Seite der Leitschraube befinden und sich entlang der axialen Richtung der Leitschraube erstrecken;

Beide Führungsschienen sind mit den Schiebern zum Andocken der Hebebasis versehen.

In einigen Fällen ist der obere Umfang der Hebebasis nach außen gerollt, um einen Begrenzungsschlitz zu bilden;

Die Basis ist mit einer Führungslasche versehen, wobei die Führungslasche mit dem Begrenzungsschlitz zusammenwirkt, sodass die Hebebasis eine einzige Hebeposition hat.

In einigen Fällen umfasst das Messer eine Messerscheibe und mindestens eine Klinge;

Die Messerscheibe ist an der Antriebswelle des Mähen-Motors befestigt;

Die Klinge ist abnehmbar am Umfang der Messerscheibe installiert.

In einigen Fällen ist das Steuermodul eine Fernsteuerung oder eine in der Basis installierte Tastenanordnung.

In einigen Fällen besteht das Steuermodul aus Sensoren und einer Hauptsteuerplatine;

Die Sensoren werden verwendet, um Umgebungsinformationen über den zu mähenden Bereich zu erhalten und in Echtzeit an die Hauptsteuerkarte zurückzumelden, wobei die Hauptsteuerkarte den Betrieb des Hebemotors und des Mähen-Motors auf der Grundlage der Umgebungsinformationen steuert, um den zu mähenden Bereich mit Hilfe der Messer zu trimmen.

In einigen Fällen umfasst das Bewegungsmodul einen ersten Endschalter, einen zweiten Endschalter und ein Verriegelungselement;

Der erste Endschalter und der zweite sind an der Ober- und Unterseite der Hebevorrichtung installiert; Das an der Leitmutter befestigte Verriegelungselement wirkt mit dem ersten Endschalter bzw. dem zweiten Endschalter während des Hebens und Senkens zusammen, um die Hin- und Her-Bewegung des Messers innerhalb des Bewegungsbereichs zu begrenzen.

In einigen Fällen umfasst der Mähmechanismus außerdem ein erstes Dichtungselement;

Der Mähen-Motor ist am Umfang in der Nähe des Antriebswellenendes mit einer Stufenstruktur versehen, wobei das erste Dichtungselement an der Stufenstruktur und an der Innenwandfläche der Hebebasis eingerastet ist.

In einigen Fällen umfasst die Hebevorrichtung außerdem ein zweites Dichtungselement;

Das zweite Dichtungselement ist zwischen der Führungslasche und der Hebebasis installiert und liegt an der Außenwandfläche der Hebebasis an;

Das zweite Dichtungselement hat eine Wandstärke, die von oben nach unten dünner wird.

Die Anmeldung bietet auf der anderen Seite einen Rasenmähroboter, der Folgendes umfasst:

einen Roboterkörper;

das höhenverstellbare Mähgerät wie oben beschrieben;

das höhenverstellbare Mähgerät, der an dem Roboterkörper installiert ist, um die zu mähenden Flächen während der Bewegung des Roboterkörpers zu trimmen.

Die Anmeldung hat mindestens eine der folgenden vorteilhaften Wirkungen:
1. Die Anmeldung bietet ein höhenverstellbares Mähgerät mit einem Steuermodul zur Steuerung der Höhenverstellung des Messers mittels eines Hebemechanismus, damit das Gerät auf verschiedene Arten von Gras und verschiedene Anforderungen angewendet werden kann; Das Mähgerät ist hochautomatisiert und löst das bestehende Problem der fehlerhaften manuellen Schaltvorgänge durch Menschenhand. Die Maschine ist außerdem mit einem Bewegungsmodul ausgestattet, das den Bewegungsbereich der Auf- und Abwärtsbewegung des Messers während des Trimmvorgangs begrenzt, was die Sicherheit und den Komfort des Arbeitsvorgangs erhöht.
2. Die Anmeldung stellt ein höhenverstellbares Mähgerät zur Verfügung; Mit einem ersten Dichtungselement zwischen dem Mähen-Motor und der Hebebasis und einem zweiten Dichtungselement zwischen der Begrenzungslasche und der Hebebasis kann es den wasserdichten Effekt und den Reinigungseffekt des installierten Materials verbessern und den Gebrauchseffekt und die Lebensdauer der Trimmausrüstung verlängern.

### ABBILDUNGEN

Die Anmeldung wird nachstehend in Verbindung mit den beigefügten Abbildungen und spezifischen Arbeitsweisen näher beschrieben:
Fig. 1 zeigt eine schematische Darstellung des Aufbaus des höhenverstellbaren Mähgeräts der Anmeldung in der Vorderansicht;
Fig. 2 ist eine schematische Darstellung des dreidimensionalen Aufbaus des höhenverstellbaren Mähgeräts der Anmeldung;
Fig. 3 ist eine Querschnittsansicht von A-A in Fig. 1;
Fig. 4 ist eine schematische Darstellung der Seitenansicht des höhenverstellbaren Mähgeräts der Anmeldung;
Fig. 5 ist eine Querschnittsansicht von B-B in Fig. 1;
Fig. 6 ist eine Querschnittsansicht von C-C in Fig. 1;

Die numerischen Bezeichnungen der beigefügten Abbildungen:

Basis 1, Führungslasche 11, Begrenzungsschlitz 12, Mähmechanismus 2, Mähen-Motor 21, Stufenstruktur 211, Mähen-Motorspindel 212, Messerscheibe 22, Messer 23, Hebemechanismus 3, Struktur der Leitschraube 31, Leitschraube 311, Leitmutter 312, Hebebasis 32, Führungsstruktur 33, Führungsschiene 331, Schieber 332, Führungssitz 333, Befestigungselement 3331, Führungselement 3332, Hebemotor 34, erstes Zahnrad 341, zweites Zahnrad 342, drittes Zahnrad 343, Lager 344, Steuermechanismus 4, Bewegungsmodul 41, erster Endschalter 411, zweiter Endschalter 412, Verriegelungselement 413, Dichtungsmechanismus 5, erstes Dichtungselement 51, zweites Dichtungselement 52, Dichtungsdeckel 53.

### SPEZIFISCHE ARBEITSWEISEN

Zur besseren Veranschaulichung der technischen Lösungen in Ausführungsformen der Anmeldung oder im Stand der Technik werden im Folgenden bestimmte Arbeitsweisen der Anmeldung in Verbindung mit den beigefügten Abbildungen beschrieben. Es ist klar, dass die Abbildungen in der folgenden Beschreibung nur einige Ausführungsformen der Anmeldung darstellen und dass auch andere Abbildungen und andere Arbeitsweisen aus diesen Abbildungen von einem Fachmann auf dem Gebiet der Technik ohne schöpferischen Aufwand erhalten werden können.

Um die Abbildungen einfach zu halten, sind darin nur die Teile schematisch dargestellt, die für die Anmeldung relevant sind; Sie stellen nicht dessen tatsächlichen Aufbau als Produkt dar. Um die Abbildungen einfach und leicht verständlich zu machen, ist in einigen Abbildungen nur eines der Bauteile mit derselben Struktur oder Funktion schematisch dargestellt oder nur eines von ihnen angegeben. In diesem Dokument bedeutet "eine" nicht nur "nur eine", sondern kann auch "mehr als eine" bedeuten.

Es ist ferner zu verstehen, dass der Begriff "und/oder", wie er in der Beschreibung dieser Anmeldung und den beigefügten Patentansprüchen verwendet wird, sich auf jede und alle möglichen Kombinationen von einem oder mehreren der im Zusammenhang damit aufgeführten Punkte bezieht und solche Kombinationen einschließt.

Es ist hierzu beachten, dass die Begriffe "installiert", "verbunden" und "angeschlossen" im weitesten Sinne zu verstehen sind, sofern nicht ausdrücklich anders angegeben und eingeschränkt. Es kann sich um eine feste Verbindung, eine lösbare Verbindung oder eine einteilige Verbindung handeln; Es kann sich um eine mechanische Verbindung oder eine elektrische Verbindung handeln; Es kann sich um eine direkte Verbindung oder eine indirekte Verbindung über ein Zwischenmedium handeln, und es kann sich um eine Verbindung innerhalb zweier Elemente handeln. Für einen Fachmann ist die spezifische Bedeutung der oben genannten Begriffe im Zusammenhang mit der Anmeldung im Einzelfall nachvollziehbar.

Ferner werden in der Beschreibung der vorliegenden Anmeldung die Begriffe "erste", "zweite" usw. nur zur Unterscheidung der Beschreibung verwendet und sind nicht so auszulegen, dass sie eine relative Bedeutung anzeigen oder implizieren.

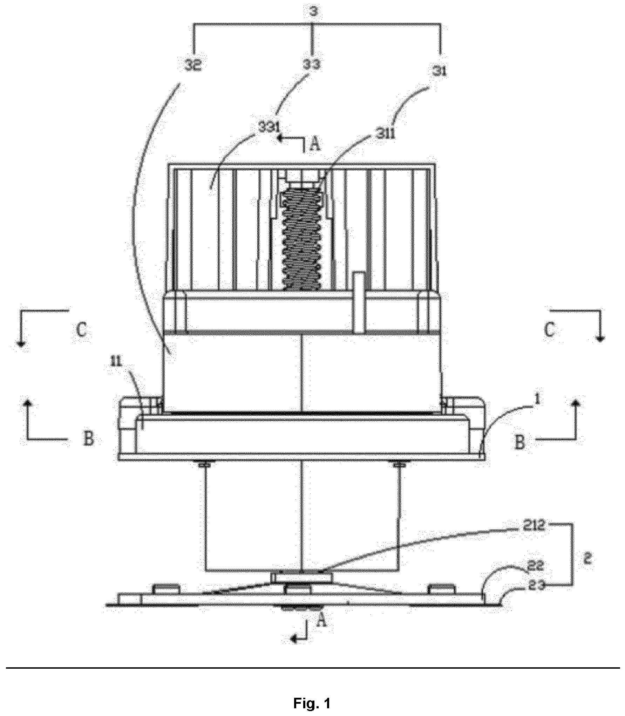

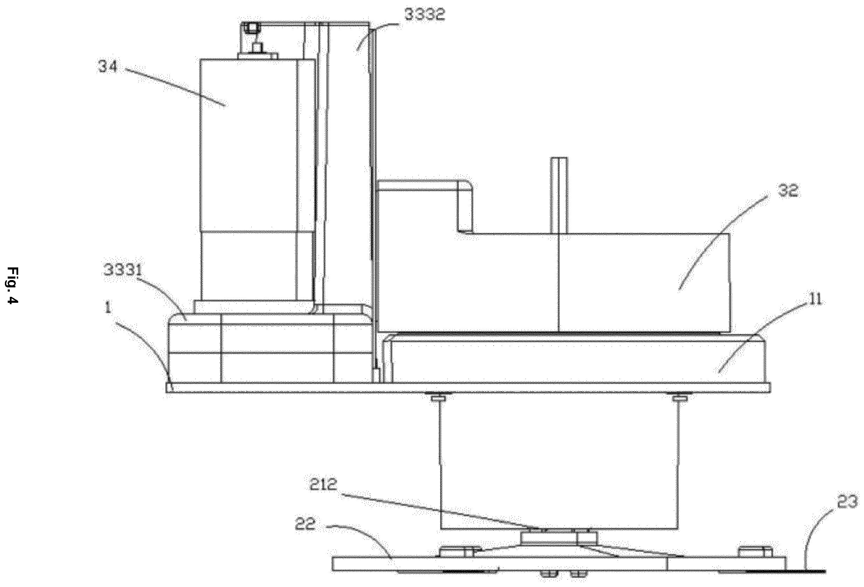

In einer Ausführungsform, die sich auf die Figuren 1 bis 4 der beiliegenden Beschreibung bezieht, bietet die Anmeldung ein höhenverstellbares Mähgerät, welches eine Basis 1 und einen Mähmechanismus 2 sowie einen Hebemechanismus 3 umfasst, der an der Basis 1 installiert ist. Der Mähen-Motor 21 wird zum Antrieb des Werkzeugs 23 verwendet; Der Hebemechanismus 3 umfasst einen Hebemotor 34 und eine Hebevorrichtung; Die Hebevorrichtung ist mit dem Mähen-Motor 34 verbunden; Der Hebemotor 34 treibt die Hebevorrichtung nach oben und unten an, um das Messer 23 anzuheben; Der Steuermechanismus 4 umfasst ein Bewegungsmodul 41 und ein Steuermodul; Das Bewegungsmodul 41 ist in der Hebevorrichtung installiert, um das Messer 23 auf eine Hin-und Her-Bewegung innerhalb seines Bewegungsbereichs zu begrenzen; Das Steuermodul wird für den Betrieb des Mähen-Motors 21 und des Hebemotors 34 verwendet.

In dieser Ausführungsform wird die Höhe des Messers 23 durch das Steuermodul eingestellt, um den Hebemechanismus 3 zu steuern, sodass die Trimmausrüstung für verschiedene Grasarten und unterschiedliche Anforderungen geeignet ist; Das Mähgerät ist hochautomatisiert und löst das bestehende Problem der fehlerhaften manuellen Schaltvorgänge durch Menschenhand. Die Maschine ist außerdem mit einem Bewegungsmodul 41 zur Begrenzung des Bewegungsbereichs der Auf- und Abwärtsbewegung des Messers 23 während des Mähvorgangs ausgestattet, was die Sicherheit und den Komfort des Betriebs erhöht.

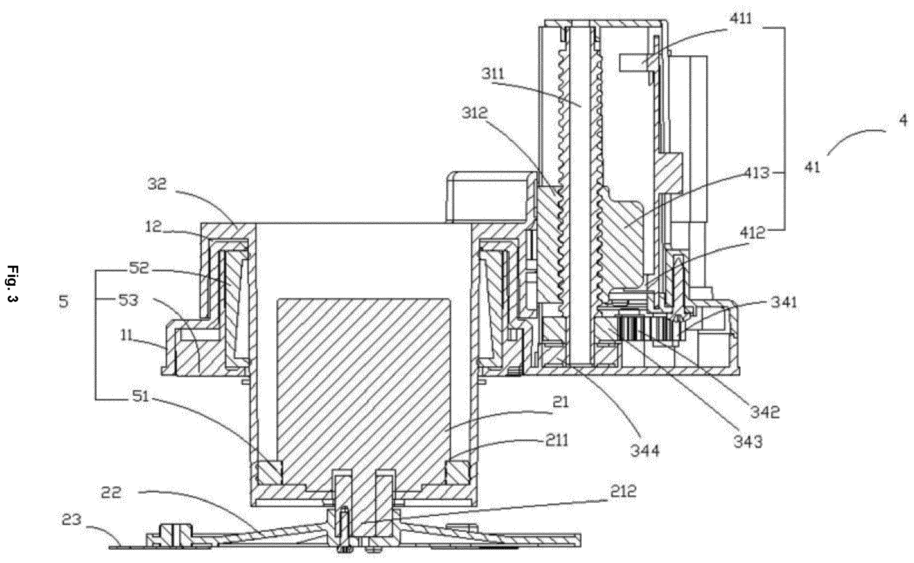

Konkret umfasst der Mähmechanismus 2 gemäß Fig. 3 einen Mähen-Motor 21, eine Messerscheibe 22 und ein Messer 23. Die Messerscheibe 22 ist auf einer Spindel 212 des Mähen-Motors 21 installiert, und das Messer 23 ist abnehmbar auf dem Umfang der Messerscheibe 22 zum Trimmen und Mähen der zu trimmenden Flächen, z. B. Rasen, Büsche usw., installiert. Die praktische Anwendung des Arbeitsszenarios ist hier nicht eingeschränkt und wird nicht weiter beschrieben. Der Mähen-Motor 21 dient zum Antrieb des Messers 23, um die zu mähenden Flächen zu trimmen. In diesem Beispiel werden die konkrete Anzahl, die Art der Messer 23 sowie die konkrete Anordnung der Messer flexibel nach den tatsächlichen Erfordernissen eingestellt. So kann die Anzahl der Messer 23 beispielsweise zwei betragen, die symmetrisch an gegenüberliegenden Kanten der Klinge 22 angeordnet sind. Die Anzahl der Messer 23 kann beispielsweise auch mehr als zwei betragen und in gleichen Abständen entlang der Umfangskanten der Messerscheibe 22 angeordnet sein, was alles unter Schutz des Patents gestellt wird.

Es ist erwähnenswert, dass der Vorteil des abnehmbaren Messers 23 darin besteht, dass beim Austausch nur ein beschädigtes Messer 23 teilweise ausgetauscht werden muss, anstatt das gesamte Bauteil zu ersetzen, was Kosten spart.

Es sollte beachtet werden, dass das Material des Messers 23 entweder ein hartes Metall sein kann, wie Eisen, rostfreier Stahl usw. Natürlich kann es auch ein weiches Material sein, wie z.B. Nylonfaden, solange es die Schneidefunktion des Mähgeräts ausführen kann; Das spezifische Material des Messers 23 sollte keine Einschränkung der Anmeldung darstellen.

Nach Figs. 1 bis 4 umfasst die Hebevorrichtung insbesondere eine Hebebasis 32, eine Führungsstruktur 33 und eine Struktur der Leitschraube 31, wobei die eine Struktur der Leitschraube 31 an der Führungsstruktur 33 befestigt ist und kann sich in Bezug auf die Führungsstruktur 33 drehen; Ferner ist die Hebebasis 32 an der Struktur der Leitschraube 31 befestigt und kann in Bezug auf die Struktur der Leitschraube 31 nach oben und unten gleiten. Die Führungsstruktur 33 dient als Führung, sodass die Hebebasis 32 die einzige Bewegungsrichtung hat; Der Hebemotor 34 wird zum Antrieb der Struktur der Leitschraube 31 verwendet. Der Mähen-Motor 21 des Mähmechanismus 2 ist an der Innenseite der Hebebasis 32 installiert und die Messerscheibe 22 ist an der Außenseite der Hebebasis 32 installiert, wobei der Mähen-Motor 21 mit der Messerscheibe 22 mittels einer Mähen-Motorspindel 212 verbunden ist. Die Aufwärts- und Abwärtsbewegung der Hebebasis 32 wird durch die Struktur der Leitschraube 31 gesteuert, um die Höhe des Messers 23 einzustellen.

Gemäß Fig. 3 umfasst die Struktur der Leitschraube 31 eine Leitschraube 311 und eine Leitmutter 312, wobei die beiden Enden der Leitschraube 311 an den oberen und unteren Enden der Führungsstruktur 33 befestigt sind; Die Leitmutter 312 ist an der Leitschraube 311 installiert und bewegt sich hin und her während der Drehung der Leitschraube 311 entlang der axialen Richtung der Leitschraube 311. Die Leitmutter 312 ist fest mit der Hebebasis 32 verbunden und bewegt sich auf und ab, wenn die Leitschraube 311 gedreht wird. Wie aus den Abbildungen 1, 2 und 3 hervorgeht, umfasst die Führungsstruktur 33 eine Führungsschiene 331 und einen Schieber 332. In dieser Ausführungsform umfasst die Führungsstruktur 33 auch einen Führungssitz 333. Vorzugsweise umfasst der Führungssitz 333 ein L-förmiges Befestigungselement 3331 und ein Führungselement 3332, das an der Basis 1 zur Befestigung des Führungselements 3332 installiert ist, sodass das Führungselement 3332 vertikal ausgefahren ist. In einigen bevorzugten Ausführungsformen ist die Leitschraube 311 vertikal auf dem Führungselement 3332 installiert. Das untere Ende der Leitschraube 311 ist mit Hilfe von Lagern 344 drehbar am Befestigungselement 3331 und das obere Ende der Leitschraube 311 drehbar am oberen Ende des Führungselements 3332 gelagert.

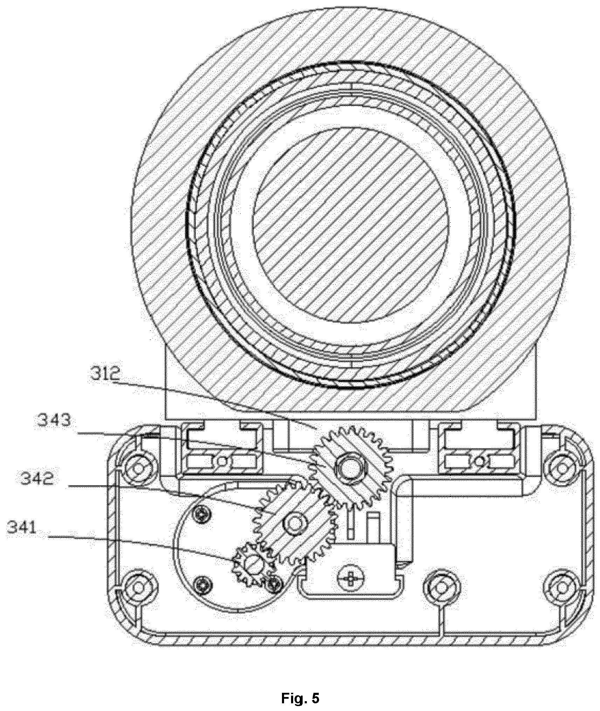

Wie aus den Abbildungen 3 und 5 hervorgeht, ist der Hebemotor 34 an der Basis 1 und neben dem Führungselement 3332 angeordnet. Insbesondere kann der Hebemotor 34 die Drehung der Leitschraube 311 über einen Getriebesatz antreiben, um das Anheben des Messers 23 zu bewirken. In einer bevorzugten Ausführungsform umfasst der Zahnradsatz ein erstes Zahnrad 341, ein zweites Zahnrad 342 und ein drittes Zahnrad 343, wobei das erste Zahnrad 341 mit dem Hebemotor 34 verbunden ist, das dritte Zahnrad 343 mit einem Ende der Leitschraube 311 verbunden ist und das zweite Zahnrad 342 zwischen dem ersten Zahnrad 341 und dem dritten Zahnrad 343 installiert ist und sowohl mit dem ersten Zahnrad 341 als auch mit dem dritten Zahnrad 343 in Eingriff steht. Ferner ist das Verbindungsloch des dritten Zahnrads 343 D-förmig und das Ende der Leitschraube 311, das mit dem dritten Zahnrad 343 verbunden ist, ist im Querschnitt ebenfalls D-förmig, wobei die D-förmige Struktur dazu dient, die Leitschraube 311 daran zu hindern, sich in Bezug auf das dritten Zahnrad 343 zu drehen. Es sollte weiter beachtet werden, dass die Anzahl der Zahnräder im Zahnradsatz nicht begrenzt ist und entsprechend den verschiedenen Situationen geändert werden kann, noch ist die Art des Zahnrads begrenzt, solange es die Funktionen erreichen kann, die in der obigen bevorzugten Ausführungsform beschrieben sind, und die Anzahl und Art der Zahnräder sollte keine Einschränkung der Anmeldung darstellen.

Es ist erwähnenswert, dass die Übertragung der Leitschraube 311 und des Hebemotors 34 nicht auf Getriebesätze beschränkt ist, sondern durch jede Übertragungsmethode wie Riemenscheiben, Gestängemechanismen usw. erreicht werden kann, die alle unter Schutz der Anmeldung gestellt werden.

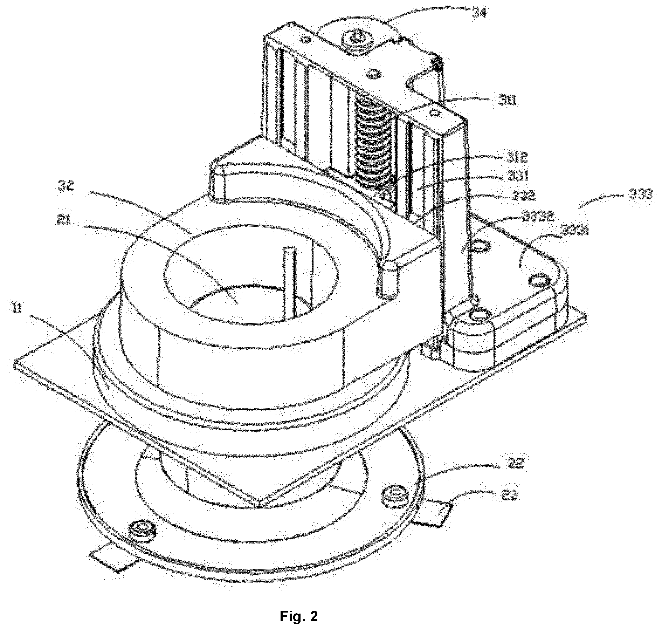

Ferner kann es sich bei den Führungsschienen 331 gemäß den Abbildungen 1 und 2 vorzugsweise um zwei handeln, die auf jeder Seite der Führungselemente 3332 installiert sind, die der Leitschraube 311 entsprechen und sich axial entlang der Leitschraube 311 erstrecken. Dementsprechend ist die Anzahl der Schieber 332 ebenfalls 2, und sie sind innerhalb der beiden Führungsschienen 331 verschiebbar und an der Hebebasis 32 befestigt, sodass die Hebebasis 32 den Schiebern 332 während der Drehung der Leitschraube 311 entlang der Führungsschienen 331 auf und ab folgen kann.

Es ist zu beachten, dass die Anzahl der Führungsschienen 331 und Schieber 332 keine Einschränkung der Anmeldung darstellen sollte.

Nach Fig. 3 ist in einigen bevorzugten Ausführungsformen das obere Ende der Hebebasis 32 nach außen gedreht, um einen Begrenzungsschlitz 12 zu bilden, und eine Führungslasche 11 ist zwischen der Hebebasis 32 und der Basis 1 installiert. Die Führungslasche 11 ist in der Mitte ausgehöhlt, damit die Hebebasis 32 hindurchgeführt werden kann, und der erhöhte Bereich um sie herum arbeitet mit dem Begrenzungsschlitz 12 zusammen, um die Bewegungsrichtung der Hebebasis 32 beim Heben und Senken weiter zu definieren, sodass die Stabilität der Hebebasis 32 während des Hebens wird weiter erhöht, um die zu mähenden Flächen besser zu trimmen.

Nach Fig. 3 umfasst der Steuermechanismus 4 ein Steuermodul und ein Bewegungsmodul 41, das zur Begrenzung der Bewegung der Hebebasis 32 innerhalb eines vorbestimmten Bewegungsbereichs verwendet wird. Das Bewegungsmodul 41 umfasst: einen ersten Endschalter 411, einen zweiten Endschalter 412 und ein Verriegelungselement 413, wobei der erste Endschalter 411 und der zweite Endschalter 412 am oberen bzw. unteren Ende des Führungselements 3332 installiert sind; Das Verriegelungselement 413 ist auf der Leitmutter 312 installiert und bewegt sich mit der Leitmutter 312 entlang der Leitschraube 311 auf und ab. Der Abstand zwischen dem ersten Endschalter 411 und dem zweiten Endschalter 412 ist der Bewegungsabstand, und das Verriegelungselement 413 kann sich nur zwischen dem ersten Endschalter 411 und dem zweiten Endschalter 412 hin und her bewegen; Der Hebebereich des Messers 23 wird begrenzt, indem der Bewegungsbereich des Verriegelungselements 413 eingeschränkt wird, um den Bereich der Auf- und Abwärtsbewegung der Hebebasis 32 zu begrenzen.

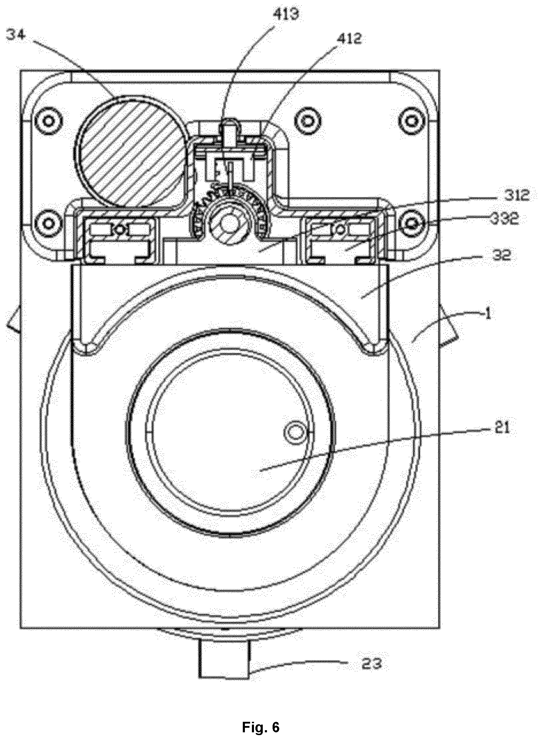

Nach den Abbildungen 1, 3 und 6 umfasst das Bewegungsmodul in einigen bevorzugten Ausführungsformen ferner eine Hauptsteuerplatine; Der erste Endschalter 411 und der zweite Endschalter 412 sind zwei Sensoren; Das Verriegelungselement 413 ist ein Sensorelement. Vorzugsweise haben der erste Endschalter 411 und der zweite Endschalter 412 die gleiche Struktur und beide haben einen Einschnitt, durch den das Verriegelungselement 413 hindurchgehen kann. Wenn sich das Verriegelungselement 413 axial mit der Leitmutter 312 entlang der Leitschraube 311 bewegt und in den Einschnitt des ersten Endschalters 411 eintritt, erkennt der erste Endschalter 411 das Verriegelungselement 413 und gibt eine Rückmeldung an die Hauptsteuerplatine, die den Betrieb des Hebemotors 34 steuert, um die Aufwärtsbewegung der Leitmutter 312 auf der Grundlage der Rückmeldeinformationen zu stoppen; Wenn sich das Verriegelungselement 413 axial mit der Leitmutter 312 entlang der Leitschraube 311 bewegt und in den Einschnitt des zweiten Endschalters 412 eintritt, erkennt der zweite Endschalter 412 das Verriegelungselement 413 und gibt eine Rückmeldung an die Hauptsteuerplatine, die den Betrieb des Hebemotors 34 steuert, um die Abwärtsbewegung der Leitmutter 312 auf der Grundlage der Rückmeldeinformationen zu stoppen. Es wird ferner darauf hingewiesen, dass der erste Endschalter 411 und der zweite Endschalter 412 zwei Sensoren oder zwei Elementen mit Sensoren sein können; der erste Endschalter 411 und der zweite Endschalter 412 können mit einem Einschnitt konstruiert sein oder ein Block sein; Sie haben einen Sensor auf einer Seite, um das Verriegelungselement 413 zu erkennen.

Es wird ferner darauf hingewiesen, dass die Form des ersten Endschalters 411, des zweiten Endschalters 412 und des Verriegelungselements 413 nicht begrenzt ist, solange sie in der Lage sind, die in der obigen Ausführungsform beschriebenen Funktionen zu erfüllen, so dass die Hebehöhe des Messers 23 auf einen vorgegebenen Bewegungsbereich begrenzt wird.

Ferner umfasst das Steuermodul eine Hauptsteuerplatine und einen Sensor, der an der Basis 1 installiert ist, um Umgebungsinformationen, wie die Höhe der zu trimmenden Flächen, zu erfassen und die erfassten Umgebungsinformationen an die Hauptsteuerplatine zurückzuleiten, die den Betrieb des Hebemotors 34 und des Mähen-Motors 21 gemäß einem voreingestellten Programm steuert.

In einigen bevorzugten Ausführungsformen kann das Steuermodul ferngesteuert werden, z. B. kann der Benutzer die Fernsteuerung bedienen, um das Heben und Senken des Messers 23 auf der Grundlage spezifischer Umgebungsinformationen wie der Höhe der zu trimmenden Flächen in Echtzeit zu steuern, um einen höheren Automatisierungsgrad zu erreichen.

In einer weiteren bevorzugten Ausführungsform kann das Steuermodul die Höhe des Messers 23 über eine an der Vorrichtung installierte Tastenanordnung steuern. Vorzugsweise kann die Tastenanordnung eine Aufwärtstaste, eine Abwärtstaste, eine Pausentaste usw. umfassen, die es dem Benutzer ermöglicht, die Höhe des Messers 23 entsprechend dem aktuellen Szenario einzustellen.

In einer Ausführungsform nach Fig. 2 umfasst das durch der Anmeldung bereitgestellte höhenverstellbare Mähgerät ferner ein erstes Dichtungselement 51 und ein zweites Dichtungselement 52.

Nach Fig. 3 ist der Mähen-Motor 21 an einem Ende nahe der Mähen-Motorspindel 212 mit einer Stufenstruktur 211 installiert; Das erste Dichtungselement 51 ist am Umfang der Stufenstruktur 211 installiert; Die Innenfläche des ersten Dichtungselements 51 erzielt mit dem Mähen-Motor 21 einen Haftsitz und die Außenfläche erzielt mit der Innenwand der Hebebasis 32 einen Haftsitz. Vorzugsweise sind sowohl die Innen- als auch die Außenfläche des ersten Dichtungselement 51 mit einem Flansch am Umfang versehen, um die Dichtwirkung zu verbessern und den Einbau zu erleichtern; Das zweite Dichtungselement 52 ist zwischen der Führungslasche 11 und dem Umfang der Außenwand der Hebebasis 32 installiert, und das obere und das untere Ende des zweiten Dichtungselements 52 sind mit einem Flansch versehen, der mit der Außenwand der Hebebasis 32 einen Haftsitz erzielt, wobei der Flansch zur Verbesserung der Dichtungswirkung verwendet wird. In einigen bevorzugten Ausführungsformen kann der Flansch aus zwei Schichten bestehen, um die Dichtungswirkung weiter zu verbessern. Es sollte beachtet werden, dass die Anzahl der Flansche keine Einschränkung der Anmeldung darstellen sollte.

In einigen bevorzugten Ausführungsformen ist die Wandstärke des zweiten Dichtungselements 52 von oben nach unten dünner; Die Reibung zwischen der Unterseite des zweiten Dichtungselements 52 und der Außenwand der Hebebasis 32 nimmt während des Anhebens der Hebebasis 32 zu; Die Wandstärke des unteren Endes des zweiten Dichtungselements 52 nimmt von unten nach oben allmählich zu; Die Wandstärke des unteren Endes ist dünner, um den Verformungsraum des unteren Endes des zweiten Dichtungselements 52 zu vergrößern und die Stabilität der Hebebasis 32 während des Anhebens zu verbessern. In der Praxis kann das zweite Dichtungselement 52 die an den Seitenwänden der Hebebasis 32 anhaftenden Grasreste entfernen und verhindern, dass Grasreste zwischen die Begrenzungslasche 11 und die Hebebasis 32 gelangen, wodurch die Hebebasis 32 gleichmäßiger auf und ab bewegt wird. Es sollte weiter beachtet werden, dass die Materialien des ersten Dichtungselements 51 und des zweiten Dichtungselements 52 nicht beschränkt sind, solange sie die in den obigen Ausführungsformen beschriebenen Funktionen erreichen können; Die Materialien des ersten Dichtungselements 51 und des zweiten Dichtungselements 52 sollten keine Einschränkung der Anmeldung darstellen.

In einer Ausführungsform stellt ein anderer Aspekt der Anmeldung ferner einen Rasenmähroboter bereit, der mit einem höhenverstellbaren Mähgerät ausgestattet ist und die folgenden Bauteile umfasst, nämlich einen Roboterkörper und das in der obigen Ausführungsform beschriebene höhenverstellbare Mähgerät, welches verwendet wird, um die zu trimmenden Flächen während der Bewegung des Roboterkörpers zu trimmen.

Es sollte beachtet werden, dass alle der oben genannten Ausführungsformen frei kombiniert werden können. Es ist zu beachten, dass für einen Fachmann eine Reihe von Verbesserungen möglich sind, ohne vom Prinzip der Anmeldung abzuweichen, und dass diese Verbesserungen auch unter Schutz der Anmeldung gestellt werden.

## Patentansprüche

1. Ein höhenverstellbares Mähgerät wird durch die folgenden Bauteile gekennzeichnet, nämlich:
eine Basis und einen an der Basis installierten Mäh- und Hebemechanismus;
den Mähmechanismus, der aus einem Motor zum Mähen und einem Messer besteht;
einen Mähen-Motor zum Antrieb des Messers;
den Hebemechanismus, der einen Hebemotor und eine Hebevorrichtung umfasst;
eine mit dem Mähen-Motor verbundene Hebevorrichtung, wobei sich der Hebemotor durch den
Antrieb der Hebevorrichtung auf und ab bewegt, um das Messer anzuheben;
einen Steuermechanismus mit einem Bewegungsmodul und einem Steuermodul;
das Bewegungsmodul, das in der Hebevorrichtung installiert ist, um die Bewegung des Messers
auf eine Rundreise innerhalb seines Bewegungsbereichs zu begrenzen; und das Steuermodul zur
Steuerung des Betriebs des Mähen- und Hebemotors;
die Hebevorrichtung, die eine Hebebasis und eine Führungsstruktur umfasst; die Führungsstruktur
ist auf der Basis installiert; der Mähen-Motor ist auf der Hebebasis installiert; der obere Umfang
der Hebebasis ist nach außen gerollt, um einen Begrenzungsschlitz zu bilden; die Basis ist mit
einer Führungslasche versehen, wobei die Führungslasche mit dem Begrenzungsschlitz zusammenwirkt, sodass die Hebebasis eine einzige Hebeposition hat.

2. Das höhenverstellbare Mähgerät nach Anspruch 1 wird durch die folgenden Bauteile gekennzeichnet, nämlich:
die Hebevorrichtung, die außerdem eine Struktur der Leitschraube umfasst;
die Struktur der Leitschraube, die an der Führungsstruktur befestigt ist;
die Hebebasis, die verschiebbar an der Schraubenstruktur installiert ist;
die Hebebasis, die sich in Bezug auf die Struktur der Leitschraube unter der Führung der Führungsstruktur auf und ab bewegt, um den Mähen-Motor und das Messer anzuheben.

3. Das höhenverstellbare Mähgerät nach Anspruch 2 wird durch die folgenden Bauteile gekennzeichnet, nämlich:
die Struktur der Leitschraube, die eine Leitschraube und eine Leitmutter umfasst;
die Leitschraube, die in der Führungsstruktur installiert ist;
den Hebemotor, der die Leitschraube antreibt, damit sie sich in Bezug auf die Führungsstruktur
dreht;
die Leitmutter, die an der Leitschraube befestigt ist und sich entlang der Leitschraube auf und ab
bewegt, wenn sich die Leitschraube dreht;
die Hebebasis, die an der Leitmutter befestigt ist.

4. Das höhenverstellbare Mähgerät nach Anspruch 3 wird durch die folgenden Bauteile gekennzeichnet, nämlich:
die Führungsstruktur, die aus den Führungsschienen und einem auf dieser Schiene installierten
Schieber besteht;
die zwei Führungsschienen, die sich auf jeder Seite der Leitschraube befinden und sich entlang
der axialen Richtung der Leitschraube erstrecken;
beide Führungsschienen, die mit den Schiebern zum Andocken der Hebebasis versehen sind.

5. Das höhenverstellbare Mähgerät nach einem der Ansprüche 1 bis 4 wird durch die folgenden Bauteile gekennzeichnet, nämlich:
das Messer, das aus einer Messerscheibe und mindestens einer Klinge besteht;
die Messerscheibe, die an der Antriebswelle des Mähen-Motors befestigt ist;
die Klinge, die abnehmbar am Umfang der Messerscheibe installiert ist.

6. Das höhenverstellbare Mähgerät nach einem der Ansprüche 1 bis 4 wird durch die folgenden Bauteile gekennzeichnet, nämlich:
das Steuermodul, bei dem es sich um eine Fernbedienung oder eine in der Basis installierte
Tastenanordnung handelt.

7. Das höhenverstellbare Mähgerät nach einem der Ansprüche 1 bis 4 wird durch die folgenden Bauteile gekennzeichnet, nämlich:
das Steuermodul, das aus Sensoren und einer Hauptsteuerplatine besteht;
die Sensoren, die verwendet werden, um Umgebungsinformationen über den zu mähenden
Bereich zu erhalten und in Echtzeit an die Hauptsteuerkarte zurückzumelden. Die
Hauptsteuerkarte steuert den Betrieb des Hebemotors und des Mähen-Motors auf der Grundlage
der Umgebungsinformationen, um den zu mähenden Bereich mit Hilfe der Messer zu trimmen.

8. Das höhenverstellbare Mähgerät nach Anspruch 3 oder 4 wird durch die folgenden Bauteile gekennzeichnet, nämlich:
das Bewegungsmodul, das einen ersten Endschalter, einen zweiten Endschalter und ein Verriegelungselement umfasst;
den ersten Endschalter und den zweiten Endschalter, die an der Ober- und Unterseite der
Hebevorrichtung installiert sind; Das an der Leitmutter befestigte Verriegelungselement wirkt mit
dem ersten Endschalter bzw. dem zweiten Endschalter während des Hebens und Senkens
zusammen, um die Hin- und Her-Bewegung des Messers innerhalb des Bewegungsbereichs zu
begrenzen.

9. Das höhenverstellbare Mähgerät nach einem der Ansprüche 2 bis 4 wird durch die folgenden Bauteile gekennzeichnet, nämlich:
den Mähmechanismus, der außerdem ein erstes Dichtungselement umfasst;
den Mähen-Motor, der am Umfang in der Nähe des Antriebswellenendes mit einer Stufenstruktur
versehen ist, wobei das erste Dichtungselement an der Stufenstruktur und an der Innenwandfläche der Hebebasis eingerastet ist.

10. Das höhenverstellbare Mähgerät nach Anspruch 1 wird durch die folgenden Bauteile gekennzeichnet, nämlich:
die Hebevorrichtung, die ferner ein zweites Dichtungselement umfasst;
das zweite Dichtungselement, das zwischen der Führungslasche und der Hebebasis installiert ist
und an der Außenwandfläche der Hebebasis anliegt;
das zweite Dichtungselement, das eine Wandstärke hat, die von oben nach unten dünner wird.

11. Der Rasenmähroboter wird durch die folgenden Bauteile gekennzeichnet, nämlich:
einen Roboterkörper;
das höhenverstellbare Mähgerät nach einem der Ansprüche 1 bis 10;
das höhenverstellbare Mähgerät, der an dem Roboterkörper installiert ist, um die zu mähenden
Flächen während der Bewegung des Roboterkörpers zu trimmen.
